# EUROPEAN PATENT SPECIFICATION

(11) **EP 3 413 199 B1**
(45) Date of publication and mention of the grant of the patent: **25.12.2019**
(21) Application number: 18179638.4
(22) Date of filing: 01.02.2013
(51) Int. Cl.: G06F 9/50

(54) **COMMUNICATIONS MANAGEMENT**
KOMMUNIKATIONSVERWALTUNG
GESTION DE COMMUNICATIONS

(43) Date of publication of application: 12.12.2018
(62) Divisional of application: 13305125.0
(73) Proprietor: Amadeus S.A.S., 06410 Biot (FR)
(72) Inventor: DERSY, Julien, Guildford, GU3 1AQ (GB); ORTON, David, Amersham Bucks, HP6 6BQ (GB)
(74) Representative: Hnich-Gasri, Naïma

(56) References cited:
- WO-A1-2011/022375
- US-A1- 2009 043 921
- US-A1- 2009 164 990

## Description

### Field of the Invention

The present invention relates to communications management and is more particularly, although not exclusively, concerned with the management of communication between peripheral devices within a virtualised communications system for airports.

### Background to the Invention

In airport communication systems, a peripheral manager containing device drivers forms part of a client computer system which is geographically local to and is directly connected to one or more peripherals via a local communications system. Such a peripheral manager is constrained in establishing communications with central server-based applications due to the use of non-static internet protocol (IP) addresses and the requirement for IP address translation when the communication needs to traverse networks comprising a mix of public and private addressing schemes.

Within airport environments, workstations (including thin client devices, mobile/tablet devices) and peripheral devices may be shared for multiple airline usage. However, different airlines tend to utilise different systems and a problem arises where the same peripheral devices need to communicate with those different systems. One way of providing such communication requires the adaptation of existing client applications and print emulators to target remote hostnames in conjunction with addressing schemes based on fixed IP addresses. However, this is problematic for a number of reasons, including: the limited availability of public IP addresses; the complexity associated with security, firewalls and mobile data modes where 3G and/or 4G networks are used; the need for many routing configurations that need to be established and effectively managed; and the need to manage multiple stakeholders providing different elements of the communications, for example, airport authorities, network providers, airport information technology providers etc.

US-B-8032353 describes a bridged computer system in which a host computer executes peripheral driver software associated with a remote client computer and communications between the host computer and the remote client is processed using peripheral emulation of an audio codec. Audio signals are communicated between the host and remote computer using network interfaces provided in both the host and the remote computer. In the host computer, an audio interface is provided which connects to a communications network, and, in the remote computer, interfaces are provided for connecting to speakers and a microphone associated with the remote computer. In one embodiment, a peripheral emulator including an audio controller emulator and a codec emulator is provided in the host computer for connecting to the host computer network interface, the peripheral emulator implementing transcoding functions, such as, compression of outbound audio data samples and/or decompression of inbound audio samples. At the remote computer, a link interface is provided which terminates audio links by providing a physical interface, bus transceiver logic and transport layer termination, the link interface transmitting output audio data and commands, receiving input audio data and responses, communicating codec control information to codec modules, distributing a sample clock, executing a power mode state machine, and providing bus reset and initialisation functions. Registers associated with the link interface maintain the configuration states of the codec modules and these registers are emulated at the host computer so that audio software on the host computer has rapid access to codec state information during driver initialisation or when the remote computer is disconnected. In another embodiment, a peripheral interface including a peripheral emulator in the host computer is connected to the network, and a peripheral controller is provided in the remote computer for controlling a peripheral. The peripheral emulator in this case interacts with the driver software to emulate the interface of the peripheral. The peripheral interface interacts through the network with the peripheral controller within the remote client computer, the peripheral controller comprising a remote driver or other software and/or hardware for coupling to the peripheral.

However, whilst the system described in US-B-8032353 uses peripheral emulation in a peripheral interface in the host computer, interfaces need to be provided on both sides of the communications network to convert the audio signals into and from appropriate data signals for transmittal over the communications network. Whilst this can readily be implemented over a known communications network, it is difficult to implement this over different types of networks where the communications network is not known, and more importantly, where several different types of networks need to be negotiated in a single communications link.

In systems where a host computer is required to be in communication with a remote client computer, multiple addressing schemes and translation across heterogeneous local and wide area networks, including mobile carrier networks, are required to enable communications between the host computer and the remote client computer. In this case, it is difficult to establish a reliable link irrespective of the multiple addressing schemes and the different types of networks required for the necessary communication.

US2009/043921 A1 discloses a method and system for virtualisation and redirection on input/output connections to peripheral devices in which PCI/PCIe level functions are used. Virtualisation may comprise emulating peripheral device controllers where a PCI/PCIe level function redirects the access to one or more peripheral devices to corresponding virtual devices.

WO2011/022375 A1 discloses an input/output virtualisation system which provides a mechanism for sharing resources between a number of host computers using a managed transport fabric. A single device is shared across the numerous host systems within the system so that input/output virtualisation and host-to-host communication services can be provided to the host computers.

US2009/164990 A1 discloses a method for deciding at run time which input/ output mechanism a virtual machine should be using at any point in time, as well as a method for seamlessly switching between the different input/output mechanisms to the one most appropriate at that point in time.

### Summary of the Invention

It is therefore an object of the present invention to provide a system and method for virtualising applications between a host computer and at least one remote client computer.

It is another object of the present invention to provide a method for managing the communication of peripheral devices deployed within an airport environment via a virtualised communications protocol.

It is a further object of the present invention to enable virtualised applications running on a server to establish communications with client-based peripheral managers and their associated peripheral devices.

In accordance with a first aspect of the present invention, there is provided a system for operating a peripheral device associated with a client from a server, the system comprising:-
a server being configured for running at least one application;
at least one client being configured to be connected to the server via a communications link;
at least one peripheral device associated with each client; and
a peripheral manager associated with each client and being configured for controlling each associated peripheral device;
characterised in that the server comprises an application virtualisation platform for virtualising at least one application running thereon; and each client comprises a client virtualisation platform for interacting with the application virtualisation platform;
and in that the system further comprises at least one peripheral manager simulator configured to establish a virtual channel through which communication is enabled between at least one application running on the server and at least one peripheral device associated with at least one client.

Advantageously, the provision of the virtualisation platforms on the server and each client enables applications running on the server to interact with one or more clients at the same time via virtual channels established between each client and the server. This means that the server can be located at any suitable location with the clients located at various remote locations with respect to the server.

In addition, by the establishment of effectively dedicated virtual channels between each client and the server, different applications on the server can be accessed by each client and connected to relevant client-associated peripheral devices without having to compensate for different types of multiple addressing schemes and translation across heterogeneous local and wide area networks, including mobile carrier networks.

Each peripheral manager simulator preferably comprises at least one client peripheral manager simulator component associated with each client and a server peripheral manager simulator component associated with the server, the virtual channel being established between the server peripheral manager simulator component and the client peripheral manager simulator component.

In one embodiment, each server peripheral manager simulator component may be embedded in at least one application on the server. In another embodiment, each server peripheral manager may be connected to at least one application on the server.

Each application may further comprise a peripheral emulator and each server peripheral manager simulator component connects with each application by way of the peripheral emulator.

The system may further comprise an interface provided between the peripheral emulator and the server peripheral manager simulator component. In one embodiment, the interface may comprise a common use passenger processing system.

In one embodiment, the peripheral emulator may comprise a print emulator and at least one of the peripheral devices connected to at least one client comprises a printer.

The communication link may comprise at least a 3G or a 4G mobile telecommunications network.

In accordance with another aspect of the present invention, there is provided a method of connecting at least one application on a server to at least one peripheral device associated with at least one client connected to the server, the server having an application virtualisation platform and each client having a client virtualisation platform, the method comprising the steps of:
a) establishing a communications link between the server and at least one client;
b) virtualising communication protocols associated with each client and making the virtualised communications protocols available to the application virtualisation platform on the server; and
c) connecting at least one application on the server to at least one client using the client communication protocol;
characterised in that the method further comprises the steps of:-
d) establishing a virtual channel between a server peripheral manager simulator component and at least one client peripheral manager simulator component within the communications link; and
e) operating at least one peripheral device associated with at least one client using the established virtual channel between the server peripheral manager simulator component and each client peripheral manager simulator component.

By establishing the virtual channel within the communications link, a reliable connection can be provided between the server and each client irrespective of the type(s) of communications network(s) at the locality of the client.

The method may further comprise the step of transferring data from at least one peripheral device connected to a client to the server using the established virtual channel between the client peripheral manager simulator component and the server peripheral manager simulator component.

### Brief Description of the Drawings

For a better understanding of the present invention, reference will now be made, by way of example only, to the accompanying drawings in which:-
Figure 1 illustrates a block diagram of a server in accordance with the present invention;
Figure 2 is similar to Figure 1 but illustrates another configuration of the server in accordance with the present invention;
Figure 3 illustrates a block diagram of a client in accordance with the present invention;
Figure 4 illustrates a block diagram of a system in accordance with the present invention utilising the server of Figure 2 and the client of Figure 3;
Figure 5 illustrates a block diagram of a system in accordance with the present invention which comprises a server and a plurality of clients; and
Figure 6 is a flow chart illustrating the steps of operation of the system shown in Figure 4.

### Description of the Invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

The term "server" as used herein is intended to include any host computer that can connect to a communications network. In addition, the term "server" is also used to identify elements within the server.

The terms "remote client computer" or "client" as used herein are intended to include any computer or terminal that can connect to a server via a communications network. The term "client" is also used to identify elements within a remote client computer.

The term "emulator" as used herein refers to hardware or software that duplicates (emulates) the functions of a first computer system (for example, a client computer) in a second computer system (for example, a host computer) to provide an exact reproduction of the behaviour of the first computer system.

The term "simulator" as used herein refers to a hardware or software that provides a representation of the operation of a physical system over time using a model representing key characteristics and/or behaviours of the physical system.

The present invention is capable of exploitation by airports and any other parties that are involved in the provision of shared infrastructure to users in airport environments, including but not limited to, use in check-in and boarding areas, baggage claim desks and airline back offices. In addition, the present invention can also be utilised in non-airport environments.

This present invention provides a method for managing the communication with peripheral devices, such as printers, scanners and readers, deployed within an airport environment via a virtualised communications protocol extended over a network. Such a network may comprise of heterogeneous network types, including local area networks and wide area networks, the latter including fixed networks or 3G/4G data communications networks. (3G relates to the third generation of mobile communications for mobile telephones and comprises CDMA2000, a family of protocols that use code division multiple access systems, and Universal Mobile Telecommunications System (UMTS). CDMA is also known as International Mobile Telecommunications Multi-Carrier (IMT-MC). 4G relates to the fourth generation which provides mobile ultra-broadband internet access using, for example, Long Term Evolution (LTE).)

In particular, a method will be described which overcomes the challenges associated with communication between a remote central server and peripheral devices associated with airport-based clients where the communication may include multiple addressing schemes and translation across heterogeneous local and wide area networks, including mobile carrier networks. As mentioned above, the present invention can be implemented in any system in which communication is to be established where multiple addressing schemes are needed between a remote central server and a local client and associated peripheral devices.

In the system of the present invention, a server is in communication with at least one remote client computer. A peripheral manager simulator simulates a peripheral manager on the server to communicate with a client peripheral manager in each remote client computer. The peripheral manager simulator preferably comprises a server peripheral manager simulator component and a client peripheral manager simulator component between which the virtual channel is established. The server peripheral manager simulator component and the client peripheral manager simulator component work together to simulate application communication from the server to each remote client computer so that the peripheral manager associated with each remote client computer can control the operation of its associated peripheral devices. Additionally, the virtual channel can also be used for data transfer between a peripheral device connected to the client and the server. In effect, the virtual channel is bi-directional.

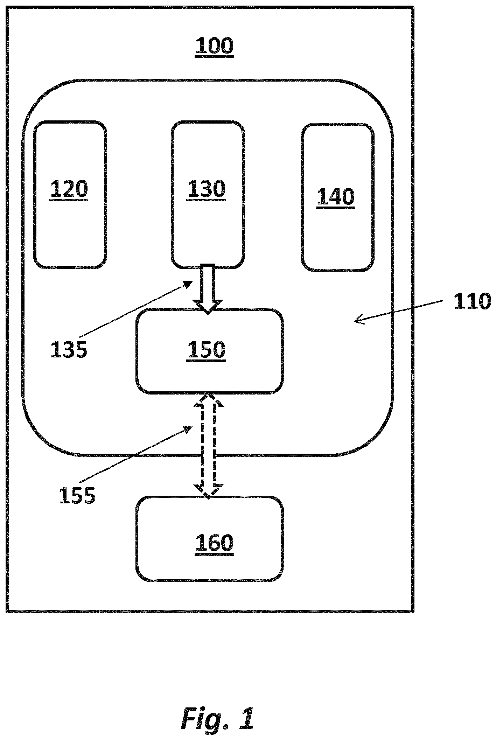

Referring initially to Figure 1, a server 100 in accordance with the present invention is shown which has a server-based application virtualisation platform 110. A plurality of applications 120, 130, 140 are shown running on the server 100 but which are virtualised on the application virtualisation platform 110. An emulator 150, for example, a print emulator, is associated with one particular application 130, for example, a print application. The application 130 interfaces with the print emulator 150 via connection 135 to provide print instructions for a peripheral device, for example, a printer (not shown) located at the location of the client.

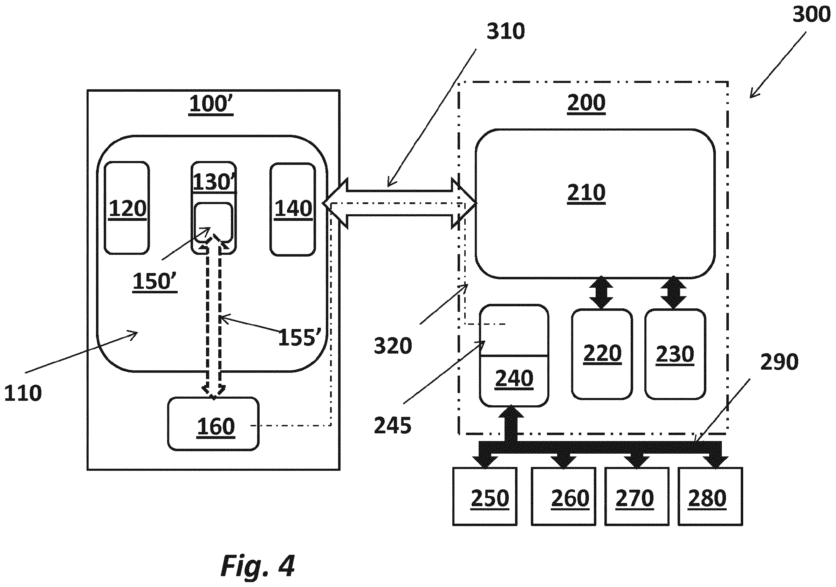

In accordance with the present invention, a server peripheral manager simulator component 160 is provided at the server 100, the server peripheral manager simulator component 160 interfacing with the print emulator 150 via connection 155. The operation of the server 100 within the system of the present invention will be described in more detail with reference to Figures 4 to 6 below.

The application virtualisation platform 110 includes software which virtualises the applications 120, 130, 140 or an operation system (not shown) on which each application runs. The server peripheral manager simulator component 160 simulates a peripheral manager (as will be described in more detail below) to enable local communications with the application emulator 150, in this case, the print emulator. A Common Use Passenger Processing System (CUPPS) or any other suitable interface type may be provided which enables communication between the print emulator and the server peripheral manager simulator component 160. (CUPPS is effectively the next generation of Common Use Terminal Equipment (CUTE) in accordance with IATA Recommended Practice 1797.)

In the embodiment of the server 100 shown in Figure 1, the application emulator 150 (or print emulator) is located within the application virtualisation platform 110. It may be connected to more than one application (not shown) if similar or identical applications are running on the server 100 and which require the same type of application emulation.

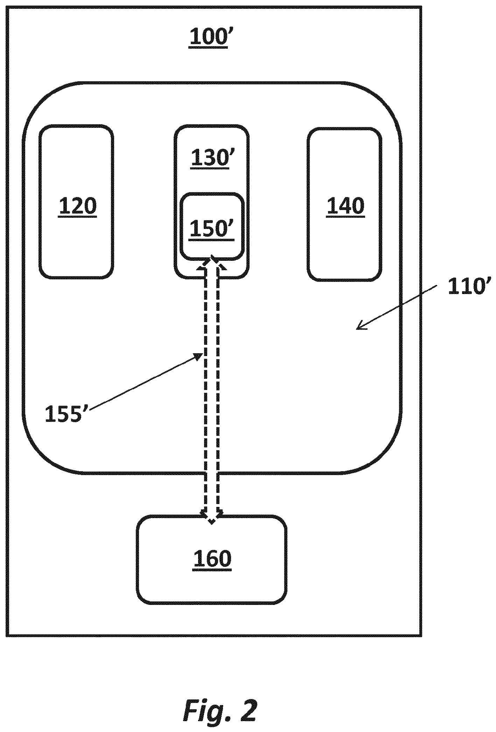

In Figure 2, a modified embodiment of the server 100' is shown. Elements which have been described above with reference to Figure 1 have the same reference numerals and will not be described in detail again. In the embodiment of Figure 2, the application virtualisation platform 110' has been modified so that the print emulator 150' forms part of the application 130' itself and interfaces with the server peripheral manager simulator component 160 via connection 155'. In this case, a suitable interface is provided to enable communications between the print (or application) emulator 150' and the server peripheral manager simulator component 160.

In a further embodiment (not shown), the server peripheral manager simulator component may be embedded in the application itself.

In an airport implementation, the server 100 (or 100') is located remotely from the airport itself and is connected thereto by means of conventional communications links. A single server 100 (or 100') may be connected to more than one airport as well as to different areas, for example, check-in, boarding gates, baggage halls and other airport front and/or back offices.

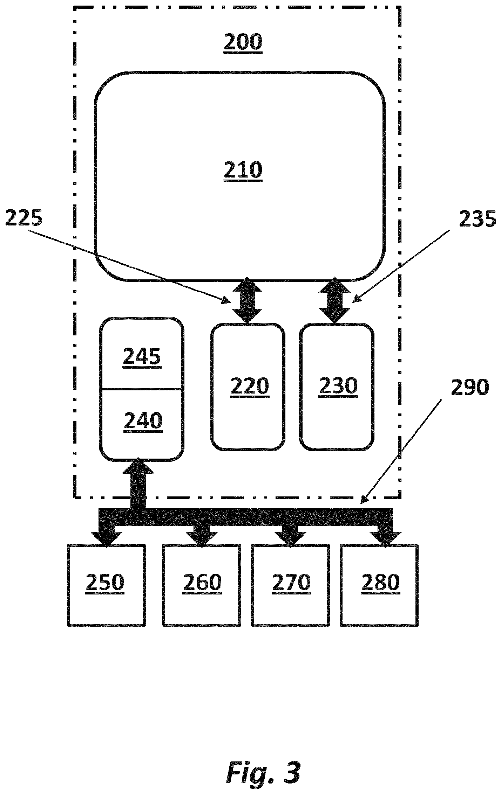

Figure 3 illustrates a client 200 which is connectable to the server 100 (Figure 1) or server 100' (Figure 2) as will be described in more detail below with reference to Figures 4 to 6. The client 200 has a client virtualisation platform 210 which interfaces with a keyboard 220 and a display 230 as shown by respective links 225, 235. Although the keyboard 220 and display 230 are shown as separate elements, they may form part of a single module (not shown). The client 200 also includes a peripheral manager 240 which is connected for controlling peripheral devices 250, 260, 270, 280 via link 290. Typical peripheral devices which may be controlled by the peripheral manager 240 include, but are not limited to, printers, scanners, and readers. Whilst link 290 may be a physical link, for example, using a universal serial bus (USB) connection, the link 290 may also be a wireless link forming part of a local area network (LAN) or a wide area network (WAN). It is also possible that the link 290 operates using mobile telecommunications, for example, forming part of a 3G or 4G network or is connected via Bluetooth. (Bluetooth is a wireless technology standard managed by the Bluetooth Special Interest Group.)

In accordance with the present invention, a client peripheral manager simulator component 245 is provided which is associated with the client peripheral manager 240. The client peripheral manager simulator component 245 is used to form a virtual channel (not shown) with the server peripheral manager simulator component 160 (Figures 1 and 2) as will be described in more detail below.

In an airport environment, a plurality of clients 200 would be provided within the airport itself, for example, at check-in desks, at boarding gates, in baggage halls etc. Each client 200 connects to the remote server 100 (or 100') to access applications running on the application virtualisation platform 110 (or 110') provided in the server 100 (or 100') as will be described in more detail below.

In Figure 4, a virtualisation system 300 in accordance with the present invention is shown. The system 300 comprises the server 100' as shown in Figure 2, but it will be appreciated that this is by way of example and the server 100 shown in Figure 1 could also be used. Elements of the server 100' as described above have the same reference numerals and will not be described in detail again here. The system 300 also includes the client 200 which is connected to the server 100' via a communications link 310. Communications link 310 may comprise a WAN or a LAN communications system which is capable of running a virtualisation protocol. As shown, the communications link 310 effectively connects the application virtualisation platform 110' to the client virtualisation platform 210. In particular, the communications link 310 comprises an internet protocol (IP) connection. In one embodiment, the virtualisation protocol utilises Citrix XenServer on the server and Citrix XenApp on each remote client computer to provide the respective virtualisation platforms. (Citrix, XenServer and XenApp are trademarks of Citrix Systems Inc. of Fort Lauderdale, Florida, USA.) However, it will be appreciated that other virtualisation protocols may be used, for example, VMWare, and Citrix applications are given by way of example. (VMWare is a trademark of VMWare Inc. of Palo Alto, California, USA.)

In addition, in accordance with the present invention, the communications link 310 effectively connects the server peripheral manager simulator component 160 with the client peripheral manager simulator component 245 forming part of the client peripheral manager 240 using a virtual channel 320 as indicated by dot-dash line as will be described in more detail below.

The client virtualisation platform 210 includes software which allows communications with the server 100 via the application virtualisation platform 110' and manages the delivery of the virtualised application or operating system to the peripheral manager 240 at the client 200. The peripheral manager 240 includes suitable device drivers (not shown) for each peripheral device 250, 260, 270, 280.

The client peripheral simulator component 245 enables communication between the client virtualisation platform 210 and the peripheral manager 240. As shown, the client peripheral manager simulator component 245 can be embedded within the peripheral manager 240. Alternatively, the client peripheral manager simulator component 245 may stand alone within the client 200 (not shown).

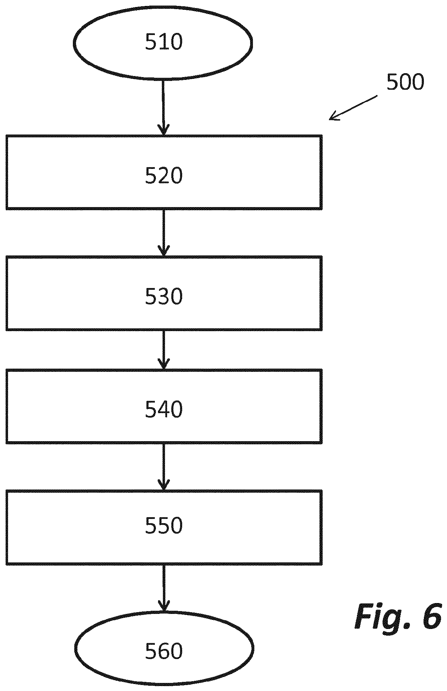

In accordance with the present invention, the provision of the server peripheral manager simulator component 160 and the client peripheral manager simulator component 245 enables the virtualisation of the system as will be described below with reference to Figure 6. Although not shown in Figure 4, it is to be noted that the virtual channel 320 extends through the communications link 310 via the application virtualisation platform 110' and the client virtualisation platform 210.

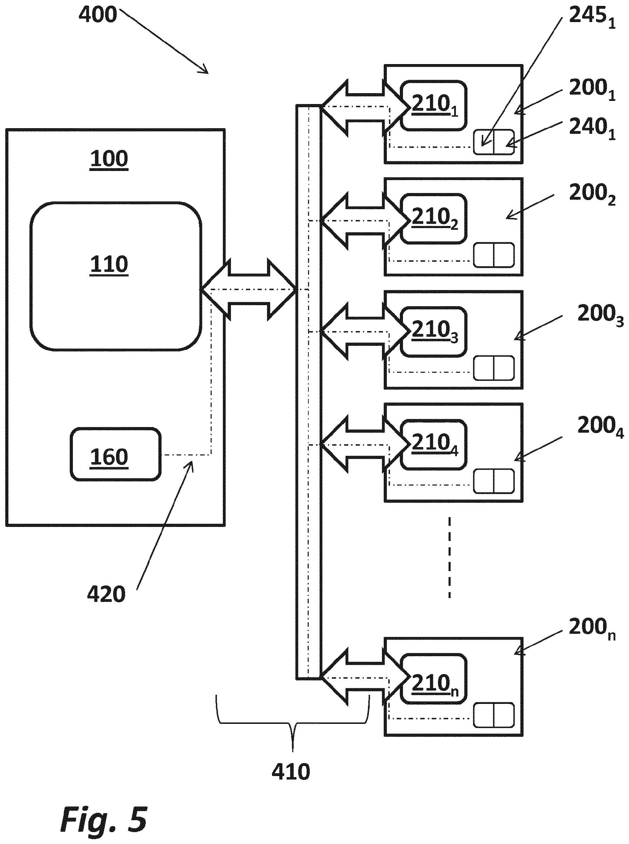

Figure 5 illustrates a system 400 in which a plurality of clients 200₁, 200₂, 200₃, 200₄, ..., 200ₙ are connected to a single server 100. Each client 200₁, 200₂, 200₃, 200₄, ..., 200ₙ has its own client virtualisation platform 210₁, 210₂, 210₃, 210₄, ..., 210ₙ and own client peripheral manager and client peripheral manager simulator component. For clarity, only the client peripheral manager 240₁ and client peripheral manager simulator component 245₁ for one client 200₁ is referenced, but it will be appreciated that the other clients also have client peripheral manager and client peripheral manager simulator components as shown.

The server 100 may be located at a central remote location and each client 200₁, 200₂, 200₃, 200₄, ..., 200ₙ may be located at any suitable location. For example, clients may be located at one airport or at a plurality of different airports all over the globe. As described above, the clients could also be located at locations, for example, at hotels or conference centres, where passengers can check-in prior to leaving for the airport.

As shown, a communications link 410 may be established between each of the clients 200₁, 200₂, 200₃, 200₄, ..., 200ₙ at the same time. A virtual channel 420 is also shown extending between the client peripheral manager simulator component 245₁ and the server peripheral manager simulator component 160. Although not shown in Figure 5, it is to be noted that the virtual channel 420 extends through the communications link 410 via the application virtualisation platform 110 and the client virtualisation platform 210.

Naturally, a virtual channel can also be established for the other client peripheral manager simulator components of each client 200₁, 200₂, 200₃, 200₄, ..., 200ₙ. Each client 200₁, 200₂, 200₃, 200₄, ..., 200ₙ may access the same application at the same time, or alternatively, more than one application may be accessed by the same or different clients. It will be appreciated that each client 200₁, 200₂, 200₃, 200₄, ..., 200ₙ accesses the server 100 via its own dedicated virtual channel within the communications link 410, that is, a plurality of virtual channels can be established between the server peripheral manager simulator 160 and each client 200₁, 200₂, 200₃, 200₄, ..., 200ₙ via the link 410.

By hosting all applications to be used by the clients on a common server, updates need only be applied once on the server without recourse to any of the clients. This reduces the complexity of keeping individual clients running the same application(s) up-to-date. In addition, as different applications can be hosted, in an airport environment, different airlines or other users of the system can use different applications but still use the same remote client computer to access their applications on the server.

In Figure 6, a flow chart 500 illustrating the basic steps of a method for operating the system is shown. Reference numerals relating to elements of the server 100' (Figure 2), the client 200 (Figure 3) and the system 300 (Figure 4) are also used in the following description. The flow chart 500 comprises four basic steps in addition to "start", step 510, and "end", step 560.

In step 510, a user logs onto the client using the keyboard 220 and the display 230 and initiates a session in which the client 200 is connected to the server 100' via communications link 310 (Figure 4). The connection between the client and the server initialises at least one graphic user interface (GUI) for one of more applications on the server 100' by calling the IP address of the server 100'. At the same time, the server peripheral simulator component 160 is also initialised.

In step 520, the connection 310 is made between the client virtualisation platform 210 and the application virtualisation platform 110' on the server 100. A connection is established for the session via the virtualisation protocol according to the platform used, for example, using Citrix as described above, provided on the two platforms 110', 210 in step 530. Support for virtual channels within this protocol enables communications with peripherals to be reliably established and which are unaffected by network address translation and blocking due to the presence of firewalls.

In step 540, the client localhost/Transmission Control Protocol (TCP) is virtualised on the client virtualisation platform 210 and made available, via the connection 310 established in step 530, to the application 130' running on the virtualised platform 110' on the server 100'. In step 550, the virtual channel 320 is established between the initialised server peripheral manager simulator component 160 and the client peripheral manager simulator component 245. The application 130' connects to the client localhost/TCP made available on the application virtualisation platform 110' in step 540, is virtualised and redirected via the virtual channel 320 back to the client peripheral manager 240 via the client peripheral manager simulator component 245.

Once the virtual channel 320 is established, all communication between the application 130' and the peripheral device with which it is to communicate is performed via the virtual channel 320, that is, all data is transferred over the virtual channel 320, either from the server 100' to the client 200 or from the client 200 to the server 100'.

The virtual channel 320 can be established regardless of the type(s) of communications network(s) operating within the communications link 310 and effectively provides a channel of direct communication between the application 130' running on the application virtualisation platform 110' and one of the peripheral devices 250, 260, 270, 280 connected to the client 200 via link 290. As described above, the application 130' may be a print application and the peripheral device connected to the client 200 may be a printer.

Naturally, other functionality may be provided by the peripheral devices, for example, scanning or reading. In this case, the scan or read is passed back from the relevant peripheral device 250,260, 270, 280 via link 290 to the server peripheral manager simulator component 160, via the associated client peripheral manager 240, the client peripheral manager simulator component 245 and the virtual channel 320. From the server peripheral manager simulator component 160, the scan or read is passed to an associated application within the application virtualisation platform 110'. The information relating to the scan or read may then be stored in a database or memory (not shown) if required.

In step 560, the session ends when the connection between the server 100' and the client 200 is terminated when the user logs off the client 200.

As described above, the server peripheral manager simulator component is launched each time the virtualised application is launched, that is, every time a client connects to the server. However, it is also possible to have a single server peripheral manager simulator component which provides a connection port for each instance of the virtualised application being launched on the server in response to the connection of a client with the server. The latter option is not preferred as all connections between clients and the server will be lost if the server peripheral manager simulator needs to be restarted for whatever reason.

A peripheral emulator is described above which is associated with the application on the server which needs to connect to a peripheral device on the client. However, this is not essential and its functionality can be included in the server peripheral manager simulator component.

Although the present invention has been described with reference to an airport environment in which airport-related applications are run with each client corresponding to a check-in terminal, for example, connected to a single server, it will be appreciated that the present invention can also be used in non-airport environments irrespective of worldwide location, for example, cruise liner terminals, ferry terminals, hotels, resorts and conference centres, that is, any application where multiple clients need to establish a connection with a server to access the same application over a communications link having multiple addressing schemes and translation across heterogeneous local and wide area networks, including mobile carrier networks, to enable communications between applications running on the server and peripheral devices associated with the clients.

## Claims

1. A system (300) for remotely operating terminals (200) comprising:
a server (100) comprising:
an application virtualisation platform for virtualising applications (120, 130, 140), the application virtualisation platform comprising a peripheral device emulator; and
terminals (200) communicatively connected to the server (100), wherein:
a first terminal of the terminals communicatively connected to the peripheral device and configured to establish a communication link with the server, the communication link including a virtual channel (320, 420) for communication between the first application and the peripheral device, the first terminal comprising:
a client virtualisation platform (210) for interacting with the application virtualisation platform, the client virtualisation platform configured to interface with at least one of a keyboard and display; and a peripheral manager (240) associated with the first terminal and including a device driver configured to control the peripheral device.

2. The system of claim 1, wherein a first component is associated with the server and a second component is associated with the first terminal, and the virtual channel is established between the first component and the second component.

3. The system of claim 2, wherein the first component is embedded in, or connected to, the first application.

4. The system of claim 2, wherein the first component is connected to the first application and wherein each of the applications comprises an application-specific peripheral device emulator, and the first component connects with each of the applications by way of the application-specific peripheral device emulator of the respective application.

5. The system of any preceding claim, wherein a common use passenger processing system enables communication between the first application and the peripheral device.

6. The system of any preceding claim, wherein the peripheral device emulator is a print emulator, and the peripheral device is a printer or the first emulator is a scanner emulator, and the peripheral device is a scanner.

7. The system of any preceding claim, wherein the first terminal is communicatively connected to the peripheral device using a 3G mobile telecommunications network and/or a 4G mobile telecommunications network.

8. A method for remotely operating terminals (200) by connecting at least one application (120, 130, 140) on a server (100) to a peripheral device (250, 260, 270, 280) of a terminal, the server having:
an application virtualisation platform (110) for virtualising the at least one application, the application virtualisation platform (110) comprising a peripheral device emulator, the terminal including:
a client virtualisation platform (210) for interacting with the application virtualisation platform (110) and a peripheral manager including a device driver configured to control the peripheral device (250, 260, 270, 280) the client virtualisation platform (210) configured to interface with at least one of a keyboard and display, the method comprising:
establishing a communications link between the server and the terminal;
virtualising a communication protocol associated with the terminal;
making the virtualised communications protocol available to the application virtualisation platform (110);
connecting the at least one application (120, 130, 140, 150) to the terminal (200) via the virtualised communications protocol;
establishing a virtual channel enabling communication between the at least one application and the peripheral device (250, 260, 270, 280); and
operating the peripheral device via the common use processing system.

9. The method of claim 8, wherein a first component is connected to the at least one application, and wherein each of the applications comprises an application-specific peripheral device emulator for the peripheral device, and the peripheral device connects with each of the at least one applications by way of the application-specific peripheral device emulator of the respective application.

10. The method of any of claims 8 and 9, wherein the at least one application comprises a plurality of applications, each of the applications being associated with a different airline.

11. The method of claim 10, wherein each of the applications utilizes a different addressing scheme.

12. The method of any of claims 8 to 11, wherein the terminal is one of a plurality of terminals, and the server is configured to launch a plurality of instances of each of the at least one applications, each instance being for a different terminal.

13. The method of any of claims 8 to 12, wherein the virtual channel is established by a first component associated with the server and a second component associated with the terminal.-

14. The method of any of claims 8 to 13, wherein a common use passenger processing system enables communication between the first application and the peripheral device.

15. The method of any of claims 8 to 14, wherein the first component is embedded in, or connected to, the at least one application.

## Patentansprüche

1. System (300) zum Fernbedienen von Endeinrichtungen (200), Folgendes umfassend:
einen Server (100), umfassend:
eine Anwendungsvirtualisierungsplattform zum Virtualisieren von Anwendungen (120, 130, 140);
wobei die Anwendungsvirtualisierungsplattform einen Peripherievorrichtungsemulator umfasst; und
Endeinrichtungen (200) die kommunikativ mit dem Server (100) verbunden sind, wobei:
eine erste Endeinrichtung der Endeinrichtungen kommunikativ mit der Peripherievorrichtung verbundenen ist, und konfiguriert ist, zum Einrichten einer Kommunikationsverbindung mit dem Server, wobei die Kommunikationsverbindung einen virtuellen Kanal (320, 420) für die Kommunikation zwischen der ersten Anwendung und der Peripherievorrichtung umfasst, wobei die erste Endeinrichtung Folgendes umfasst:
eine Clientvirtualisierungsplattform (210) zum Interagieren mit der Anwendungsvirtualisierungsplattform, wobei die Clientvirtualisierungsplattform konfiguriert ist, um mit mindestens eines von einer Tastatur und einer Anzeige eine Schnittstelle zu bilden, und einen Peripherieverwalter (240), der mit der ersten Endeinrichtung verknüpft ist und der einen Gerätetreiber umfasst, der zum Steuern der Peripherievorrichtung konfiguriert ist.

2. System nach Anspruch 1, wobei eine erste Komponente mit dem Server verknüpft ist und eine zweite Komponente mit der ersten Endeinrichtung verknüpft ist, und der virtuelle Kanal zwischen der ersten Komponente und der zweiten Komponente eingerichtet wird.

3. System nach Anspruch 2, wobei die erste Komponente in die erste Anwendung eingebettet oder mit ihr verbunden ist.

4. System nach Anspruch 2, wobei die erste Komponente mit der ersten Anwendung verbunden ist, und wobei jede der Anwendungen einen anwendungsspezifischen Peripherievorrichtungsemulator umfasst, und wobei die erste Komponente sich mit jeder der Anwendungen mittels des anwendungsspezifischen Peripherievorrichtungsemulators der jeweiligen Anwendung verbindet.

5. System nach einem der vorhergehenden Ansprüche, wobei ein Passagierverarbeitungssystem für eine gemeinsame Verwendung die Kommunikation zwischen der ersten Anwendung und der Peripherievorrichtung ermöglicht.

6. System nach einem der vorhergehenden Ansprüche, wobei der Peripherievorrichtungsemulator ein Druckemulator und die Peripherievorrichtung ein Drucker ist, oder der erste Emulator ein Scanneremulator und die Peripherievorrichtung ein Scanner ist.

7. Verfahren nach einem der vorhergehenden Ansprüche, wobei die erste Endeinrichtung kommunikativ mit der Peripherievorrichtung unter Verwendung eines mobilen 3G-Telekommunikationsnetzwerks und/oder eines mobilen 4G-Telekommunikationsnetzwerks verbunden ist.

8. System zum fernbedienen von Endeinrichtungen (200) durch Verbinden von mindestens einer Anwendung (120, 130, 140) auf einem Server (100) mit einer Peripherievorrichtung (250, 260, 270, 280) einer Endeinrichtungs, wobei der Server Folgendes aufweist:
eine Anwendungsvirtualisierungsplattform (110) zum Virtualisieren der mindestens einen Anwendung, wobei die Anwendungsvirtualisierungsplattform (110) einen Peripherievorrichtungsemulator umfasst; wobei die Endeinrichtung Folgendes umfasst:
eine Clientvirtualisierungsplattform (210) zum Interagieren mit der Anwendungsvirtualisierungsplattform (110);
und einen Peripherieverwalter umfassend einen Gerätetreiber der zum Steuern der Peripherievorrichtung (250, 260, 270, 280) konfiguriert ist;
wobei die Clientvirtualisierungsplattform (210) konfiguriert ist, um mit mindestens eines von einer Tastatur oder einer Anzeige, eine Schnittstelle zu bilden, wobei das Verfahren Folgendes umfasst:
Einrichten einer Kommunikationsverbindung zwischen dem Server und der Endeinrichtung;
Virtualisieren eines Kommunikationsprotokolls das mit der Endeinrichtung verknüpft ist;
Verfügbarmachen der virtualisierten Kommunikationsprotokolle für die Anwendungsvirtualisierungsplattform (110);
Verbinden der mindestens einen Anwendung (120, 130, 140, 150) mit der Endeinrichtung (200) unter Verwendung des virtualisierten Kommunikationsprotokolls;
Einrichten eines virtuellen Kanals, der die Kommunikation zwischen der mindestens einen Anwendung und der Peripherievorrichtung (250, 260, 270, 280) ermöglicht; und
Betreiben der Peripherievorrichtung unter Verwendung des Verarbeitungssystems für eine gemeinsame Verwendung.

9. Verfahren nach Anspruch 8, wobei eine erste Komponente mit der mindestens einen Anwendung verbunden ist, und wobei jede der Anwendungen einen anwendungsspezifischen Peripherievorrichtungsemulator für die Peripherievorrichtung umfasst, und wobei die Peripherievorrichtung sich mit jedem der mindestens einen Anwendung mittels des anwendungsspezifischen Peripherievorrichtungsemulator der jeweiligen Anwendung verbindet.

10. Verfahren nach einem der Ansprüche 8 und 9, wobei die mindestens eine Anwendung mehrere Anwendungen umfasst, wobei jede der Anwendungen mit einer anderen Fluggesellschaft assoziiert ist.

11. Verfahren nach Anspruch 10, wobei jede der Anwendungen ein unterschiedliches Adressierungsschema verwendet.

12. Verfahren nach einem der Ansprüche 8 bis 11, wobei die Endeinrichtung eine von mehreren Endeinrichtungen ist und der Server konfiguriert ist, um eine Vielzahl von Instanzen für jede der mindestens einen Anwendung zu starten, wobei jede Instanz für eine andere Endeinrichtung ist.

13. Verfahren nach einem der Ansprüche 8 bis 12, wobei der virtuelle Kanal durch eine erste Komponente, die mit dem Server verknüpft ist, und eine zweite Komponente, die mit der Endeinrichtung verknüpft ist, erstellt wird.

14. Verfahren nach einem der Ansprüche 8 bis 13, wobei ein Passagierverarbeitungssystem für eine gemeinsame Verwendung die Kommunikation zwischen der ersten Anwendung und der Peripherievorrichtung ermöglicht.

15. Verfahren nach einem der Ansprüche 8 bis 14, wobei die erste Komponente in der mindestens einen Anwendung eingebettet ist, oder mit ihr verbunden ist.

## Revendications

1. Système (300) pour faire fonctionner des terminaux à distance (200), comprenant :
un serveur (100) comprenant :
une plateforme de virtualisation d'application pour virtualiser des applications (120, 130, 140),
la plateforme de virtualisation d'application comprenant un émulateur de dispositif périphérique ; et
des terminaux (200) connectés en communication avec le serveur (100), dans lequel :
un premier terminal des terminaux connectés en communication avec le dispositif périphérique et configurés pour établir une liaison de communication avec le serveur, la liaison de communication comprenant un canal virtuel (320, 420) pour une communication entre la première application et le dispositif périphérique, le premier terminal comprenant :
une plateforme de virtualisation cliente (210) pour interagir avec la plateforme de virtualisation d'application, la plateforme de virtualisation cliente étant configurée pour s'interfacer avec au moins l'un parmi un clavier et un dispositif d'affichage ; et un gestionnaire de périphérique (240) associé au premier terminal et comprenant un pilote de périphérique configuré pour contrôler le dispositif périphérique.

2. Système selon la revendication 1, dans lequel un premier composant est associé au serveur et un second composant est associé au premier terminal, et le canal virtuel est établi entre le premier composant et le second composant.

3. Système selon la revendication 2, dans lequel le premier composant est embarqué dans, ou connecté à, la première application.

4. Système selon la revendication 2, dans lequel le premier composant est connecté à la première application et dans lequel chacune des applications comprend un émulateur de dispositif périphérique spécifique à une application, et le premier composant se connecte à chacune des applications par l'intermédiaire de l'émulateur de dispositif périphérique spécifique à une application de l'application respective.

5. Système selon l'une quelconque des revendications précédentes, dans lequel un système de traitement de passager d'usage commun permet une communication entre la première application et le dispositif périphérique.

6. Système selon l'une quelconque des revendications précédentes, dans lequel l'émulateur de dispositif périphérique est un émulateur d'impression, et le dispositif périphérique est une imprimante ou le premier émulateur est un émulateur scanner, et le dispositif périphérique est un scanner.

7. Système selon l'une quelconque des revendications précédentes, dans lequel le premier terminal est connecté en communication avec un dispositif périphérique utilisant un réseau de télécommunication mobile 3G et/ou un réseau de télécommunication mobile 4G.

8. Procédé pour faire fonctionner des terminaux à distance (200) en connectant au moins une application (120, 130, 140) sur un serveur (100) à un dispositif périphérique (250, 260, 270, 280) d'un terminal, le serveur comportant :
une plateforme de virtualisation d'application (110) pour virtualiser l'au moins une application, la plateforme de virtualisation d'application (110) comprenant l'émulateur de dispositif périphérique, le terminal comprenant :
une plateforme de virtualisation cliente (210) pour interagir avec la plateforme de virtualisation d'application (110)
et un gestionnaire périphérique comprenant un pilote de périphérique configuré pour contrôler le dispositif périphérique (250, 260, 270, 280),
la plateforme de virtualisation cliente (210) étant configurée pour s'interfacer avec au moins l'un parmi un clavier et un dispositif d'affichage, le procédé comprenant les étapes consistant à:
établir une liaison entre le serveur et le terminal ;
virtualiser d'un protocole de communication associé au terminal ;
mettre le protocole de communication virtualisé à disposition de la plateforme de virtualisation d'application (110) ;
connecter l'application (120, 130, 140, 150) au terminal (200) par l'intermédiaire du protocole de communications virtualisé ;
établir un canal virtuel permettant la communication entre l'au moins une application et le dispositif périphérique (250, 260, 270, 280) ; et
faire fonctionner le dispositif périphérique par l'intermédiaire du système de traitement d'usage commun.

9. Procédé selon la revendication 8, dans lequel un premier composant est connecté à l'au moins une application, et dans lequel chacune des applications comprend un émulateur de dispositif périphérique spécifique à une application pour le dispositif périphérique, et le dispositif périphérique se connecte à chaque application par l'intermédiaire de l'émulateur de dispositif périphérique spécifique à une application de l'application respective.

10. Procédé selon l'une quelconque des revendications 8 et 9, dans lequel l'au moins une application comprend une pluralité d'applications, chacune des applications étant associée à une compagnie aérienne différente.

11. Procédé selon la revendication 10, dans lequel chacune des applications utilise un système d'adressage différent.

12. Procédé selon l'une quelconque des revendications 8 à 11, dans lequel le terminal est un terminal parmi une pluralité de terminaux, et le serveur est configuré pour lancer une pluralité d'instances de chaque application, chaque instance étant pour un terminal différent.

13. Procédé selon l'une quelconque des revendications 8 à 12, dans lequel le canal virtuel est établi par un premier composant associé au serveur et un second composant associé au terminal.

14. Procédé selon l'une quelconque des revendications 8 à 13, dans lequel un système de traitement de passagers d'usage commun permet une communication entre la première application et le dispositif périphérique.

15. Procédé selon l'une quelconque des revendications 8 à 14, dans lequel le premier composant est embarqué dans, ou connecté à la au moins une application.
